# EUROPEAN PATENT APPLICATION

(11) **EP 2 799 122 A1**
(43) Date of publication of application: **05.11.2014**
(21) Application number: 14166169.4
(22) Date of filing: 28.04.2014
(51) Int. Cl.: B01D 3/10, C01B 15/013, B01D 3/08

(54) **Method and arrangement for concentrating hydrogen peroxide**

(30) Priority: 30.04.2013 PL 40372113
(71) Applicant: Instytut Lotnictwa, 02-256 Warszawa (PL)
(72) Inventor: Rarata, Grzegorz, 02-811 Warszawa (PL); Surmacz, Pawel, 22-470 Zwierzyniec (PL); Florczuk, Wojciech, 08-110 Siedlce (PL)
(74) Representative: Sielewiesiuk, Jakub

(57) **Abstract**

The object of the invention is an arrangement for vacuum distillation of hydrogen peroxide feedstock, comprising in sequence: heating means (1), an axisymmetric distillation flask (2), means (3) for propelling the distillation flask (2) in rotation about its axis, a rectification column (4), a catch-drop (5), a connection of a vacuum pump (6), a condenser (7), an inlet for cooling water (8), a distillate receiver (9), characterised in that the axis of the distillation flask (2) is positioned at an angle of 105° to 140° respect to the rectification column (4), the distillation flask (2) is capable of rotation about its axis and is at least partially placed in the heating means (1), and furthermore the distillation flask (2) comprises an RI sensor for measuring the concentration of hydrogen peroxide. Furthermore, the invention relates to a method for obtaining hydrogen peroxide, especially of HTP class, for propulsion applications, by a two-step process of vacuum distillation, which is performed in the above arrangement for vacuum distillation, comprising: a) step of fractional vacuum distillation, consisting in concentrating the hydrogen peroxide feedstock, and then b) step of vacuum purification of hydrogen peroxide obtained above, consisting in distilling off hydrogen peroxide, preferably having a concentration of above 98%, is conducted, wherein in step a) the rotational distillation flask operates in conditions of about 80 revolutions/minute, at a negative pressure of 7 - 20 mbars and at a water bath temperature of 35 - 55°C, and in step b) the rotational vacuum evaporator operates in conditions of at least 120 revolutions/minute, at a negative pressure of up to 12 mbars and at a water bath temperature of up to 55°C.

## Description

The invention is related to the method for obtaining hydrogen peroxide, especially of HTP class for propulsion applications, and an arrangement for vacuum distillation. More specifically, the invention relates to a method for concentrating hydrogen peroxide to a concentration of 99% and above (stage I of the method) and purifying it (stage II of the method) to a purity allowing it to be qualified as HTP (High Test Peroxide), which can be used as a propellant or a strong oxidant. Therefore, the present invention also relates to a method for obtaining amounts of hydrogen peroxide for propulsion applications (e.g. in rockets) - and thus of peroxide of RGHP (Rocket Grade Hydrogen Peroxide) class which meets certain specifications. The present invention also relates to the use (parallel to concentrating) of a method for purifying previously concentrated hydrogen peroxide so that it meets the RGHP class, as defined in specification MIL-PRF-16005F, from 2003.

Highly concentrated hydrogen peroxide of HTP class (at a concentration of 98% and above) is a single-component propellant and oxidant, being currently used primarily in the rocket technology. This substance is one of the major candidates, among others, to replace hydrazine and derivatives thereof on satellite platforms if, in the near future, the European Union directive places these substances on the list of dangerous and prohibited substances (in the so called REACH - EU legal regulations on chemicals and their safe use). However, according to the ESA (European Space Agency), the demand for 98% HTP (only for applications associated with research works on rocket drives) has been evaluated at the present day at approximately 200 to 300 kg per year for the European market. At the same time, the ESA estimates (on the basis of the current sales, in Europe, of 87.5% HTP of Evonik) that in the next 4 to 5 years this market demand for HTP at a concentration of 90% and above will double. These estimates relate to "legal" consumers, i.e. mainly to scientific research institutions and to entities involved in the research and production of rocket drives. At the same time, there is a large group of "individual" customers using HTP, e.g. in amateur rocket constructions or in the so called "rocket belts". The above reasons have become an inspiration for the authors to develop their own, efficient and safe method for obtaining hydrogen peroxide of appropriate class.

Until July 2010, Swedish company Peroxide Propulsion (functioning in 2004-2010) prepared on average at least several dozen litres of HTP per month, at different concentrations (including 98%), and sold the product in many European countries. The company ended its activity because of an accident, the consequence of which was destruction of part of their infrastructure. Most probably, the accident was caused partly by an error associated with the applied method for purifying hydrogen peroxide, i.e. with the use of columns with a ion-exchange bed. The use of beds with ion-exchange resins is one of the methods for purifying hydrogen peroxide to a level required by the specifications for HTP class, especially when using lower quality feedstock or concentration techniques of "purging". However, this method is laborious and dangerous since the compatibility of ion exchange beds with hydrogen peroxide is rarely satisfactory. Moreover, it decreases with time of their use (among others, due to the accumulation of certain metal ions - catalytically active contaminants). In practice, this requires, among others, pressure control in the arrangement with a ion exchange bed.

The most important step in obtaining hydrogen peroxide of high concentration is of course the appropriate method of concentrating it.

Currently, there are several known tested methods for obtaining hydrogen peroxide having a concentration above 90%. The oldest one is a method based on vacuum fractional distillation of the concentrated solution. Moreover, it had a number of modifications (also patents).

Examples of applications / patents, known from the prior art, relating to the vacuum fractional distillation (concentrating) of aqueous solutions of hydrogen peroxide include: 1) Patent of Evonik Degussa GMBH company "Process for concentrating aqueous hydrogen peroxide solution" of application WO 2012/025333 A1 (it relates to an industrial method for continuous production of aqueous solutions of hydrogen peroxide having a concentration of 50 and 70% and it differs substantially from the laboratory method suggested by LMP (Laboratory of Propellants at the Institute of Aviation)), 2) Patent of Solvay company "Process for manufacture of concentrated solutions" EP1090663 A1 (it relates to a technical solution allowing concentration of aqueous solutions of hydrogen peroxide to a value of 98%. The process is performed on the basis of vacuum distillation and evaporation. The distillation takes place in a special column, and the evaporation in a detachable vaporiser. The distillation column may be a typical packed column but the other part of the device, i.e. the vaporiser, has special features, i.e. it is built in an arrangement of vertical tube within which a film of liquid collected from the bottom of the column, flowing down on it, evaporates. This solution differs from the method which uses a rotational vessel for evaporating liquid in order to purify it (evaporators)), 3) "Process for the manufacture of concentrated solutions", No US 6780288 B1, Solvay S.A., comprises further prior art that does not include a peroxide purification step, which is essential to obtaining hydrogen peroxide of HTP class, and 4) "Process for obtaining purified aqueous hydrogen peroxide solutions", US 5296104 A, 1994.

Currently, the most frequent variant of hydrogen peroxide distillation (concentrating) techniques for obtaining its solution having a high concentration is a method using vacuum fractional distillation realised by means of an appropriate rectification column (it is usually a glass column packed, e.g., with special rings, often embedded in a vacuum jacket, distinguished by even dozens of theoretical plates). The distillation vessel (usually in the form of a glass flask, with a volume in the range of fractions to dozens of litres) happens to be embedded in a heating jacket or in another thermoregulated heating element. The distillation vessel often has so called lateral branches (for inlet, thermometer, liquid level sensor, and other sensors). Larger distillation vessels often have, in their lower part, a drain valve. The arrangements additionally comprise systems for monitoring the distillation (concentrating) process and various of the distillation column (e.g. equipped with a thermometer and a condenser supplied with cooling water). For concentrating relatively larger amounts of hydrogen peroxide, a special two-piece rectification column with a power supply between a stripping part and a concentrating part, which additionally improves efficiency of the process, is often used. Such assemblies tend to be equipped with more advanced systems for monitoring the hydrogen peroxide distillation (concentrating) process, the systems being even based on software for optimising and developing distillation (concentrating) procedures. Additionally, with a view to facilitate the work (especially with high amounts of hydrogen peroxide) pumps compatible with the peroxide are used, e.g. a supplying pump (feedstock) and a receiving pump (depleted liquid) ("Distillation plant for producing hydrogen peroxide", US 5171407 A).

For most devices operated now or in the past, used for concentrating hydrogen peroxide by vacuum fractional distillation, several common features can be distinguished. Firstly, the process, primarily for safety reasons (but also due to efficiency), is conducted at a significantly reduced pressure (in the order of dozen mbars at the top of the distillation column), and an apparatus is made of material fully compatible with respect to hydrogen peroxide (it is usually borosilicate glass). In this manner, the risk of detonation of hydrogen peroxide vapours is minimised (the process is conducted outside the detonability of this substance in given conditions of temperature and negative pressure), and the glass apparatus minimises the risk of formation of an ignition source (e.g. a spark). In addition, glass components of the apparatus minimise the amount of trace contaminants which penetrate to the concentrated peroxide solution. Further, a proper insulation improves the conditions for the process.

The above-mentioned types of devices have such a disadvantage that the limitation for their use during the fractional vacuum (concentrating) distillation of hydrogen peroxide solutions is a quite frequent occurrence of bumping, which has a very negative impact on the process of concentration, significantly prolonging it in time. For distilled hydrogen peroxide, this unfavourable phenomenon occurs in a quite wide range of temperatures, starting from a temperature close to its boiling point under a given pressure.

Therefore, the technical solution proposed herein is primarily focused on the elimination of bumping and thereby on a significant acceleration of the process of vacuum distillation of hydrogen peroxide.

Unexpectedly, this problem could be solved in the present invention due to the fact that a new technical solution was proposed, the solution including an arrangement for vacuum distillation and a method for obtaining hydrogen peroxide, resulting in a higher rate of the evaporation process, and thereby also the rate of hydrogen peroxide concentration to a desired value, without any occurrence of bumping, thereby significantly enhancing the process of vacuum distillation of hydrogen peroxide.

According to the present invention, the arrangement for vacuum distillation of hydrogen peroxide feedstock, comprising in sequence: heating means, an axisymmetric distillation flask, means for propelling the distillation flask in rotation about its axis, a rectification column, a catch-drop, a connection of a vacuum pump, a condenser, an inlet for cooling water, a distillate receiver, is characterised in that the axis of the distillation flask is positioned at an angle of 105° to 140° respect to the rectification column, the distillation flask is capable of rotation about its axis and is at least partially placed in the heating means, and furthermore the distillation flask comprises an RI sensor for measuring the concentration of hydrogen peroxide.

Preferably, the axis of the distillation flask is positioned at an angle of 110° to 130°, more preferably 110° to 120°, most preferably 110°, respect to the rectification column.

Preferably, the RI sensor is located inside the distillation flask and is arranged in a housing that is compatible with hydrogen peroxide, preferably in a housing of polytetrafluoroethylene (PTFE) and 316L steel.

Preferably, the arrangement according to the invention comprises a rectification column selected from a packed column and a Vigreux type column, preferably with a length of 0.6m or 1.2m, wherein the packing is preferably constituted by Raschig rings, beads or helices.

Still more preferably, the arrangement according to the invention comprises a Hempel column packed with Raschig rings.

Preferably, the arrangement according to the invention is made of glass and the glass elements are covered with a polymer, preferably polytetrafluoroethylene (PTFE).

Preferably, the heating means are constituted by a water heating bath with thermostat.

Preferably, the means for propelling the distillation flask in rotation about its axis are constituted by an electric motor.

Preferably, the arrangement according to the invention comprises a distillation flask with an adjustable number of revolutions.

Preferably, the axis of the rectification column is vertical.

The invention further includes a method for obtaining hydrogen peroxide, especially of HTP class, for propulsion applications, by a two-step process of vacuum distillation, characterised in that it is performed in an arrangement for vacuum distillation according to the invention, wherein the following steps are successively conducted:
a) step of fractional vacuum distillation, consisting in concentrating the hydrogen peroxide feedstock, and then
b) step of vacuum purification of hydrogen peroxide obtained above, consisting in distilling off hydrogen peroxide, preferably having a concentration above 98%,
and in step a) the rotational distillation flask operates at about 80 revolutions/minute, at a negative pressure of 7 - 20 mbars and at a water bath temperature of 35 - 55°C, and in step b) the rotational vacuum evaporator operates in conditions of at least 120 revolutions/minute, at a negative pressure of up to 12 mbars and at a water bath temperature of up to 55°C.

Preferably, in step a) the rotational distillation flask operates in conditions of 10 - 15 mbars.

Preferably, as the feedstock - hydrogen peroxide in step a), a maximally concentrated solution, preferably having a concentration above 60%, is used.

Preferably, in step b) the rotational vacuum evaporator operates at a negative pressure of 8 - 10 mbars.

The claims relate to a method for obtaining hydrogen peroxide solutions, especially of HTP class (and thus concentrated solutions and of a purity according to appropriate standards), for propulsion applications. The method is based on the use of two separate steps of laboratory preparation:
STEP 1. Fractional vacuum distillation (concentrating) of hydrogen peroxide solutions having a concentration of several dozen per cent to a value of 99% and above, through the use of an efficient, rotational distillation flask (connected to a packed column), operating in conditions of 7 - 20 mbars, and the initial temperature was from 35°C to a maximum of 55°C.
STEP 2. Vacuum (distilling off) purification of the concentrated solution of hydrogen peroxide by means of a rotational vacuum evaporator in conditions of: 120 rev./min., water bath temperature of 50°C, negative pressure of 8 mbars (+/- 2 mbars), condenser temperature 5°C.

### Preferred Embodiments of the Invention

According to the invention, a commercially available hydrogen peroxide solution, chemically pure, at a concentration of 60% (containing up to e.g. 30 ppm of phosphates), having a relatively low content of dissolved substances, is used as a feedstock.

The use, in step I (concentrating), of even purer (but at the same time more expensive) hydrogen peroxide feedstock, e.g. 60% p.a., allows, as a result, preparation of the so-called ultra clear HTP solutions (required e.g. by manufacturers of drives for satellites and semiconductors).

From the concentration processes already conducted by the authors of the application, it follows that the addition of the so-called boiling chips (broken glass, commercially available pellets, etc.) has relatively little impact on stopping the phenomenon of overheating of hydrogen peroxide solutions in the distillation flask (so called bumping phenomenon).

The best solution in this regard turned out to be the use of the distillation flask with an adjustable range of revolutions around its own axis, arranged obliquely respect to the rectification column (a solution similar to that used in rotational vacuum evaporators). Furthermore, the authors' experience in this regard indicates that such a solution, thanks to evaporation in the column taking place primarily from the surface of the liquid film, significantly increases efficiency of the whole process of concentrating hydrogen peroxide.

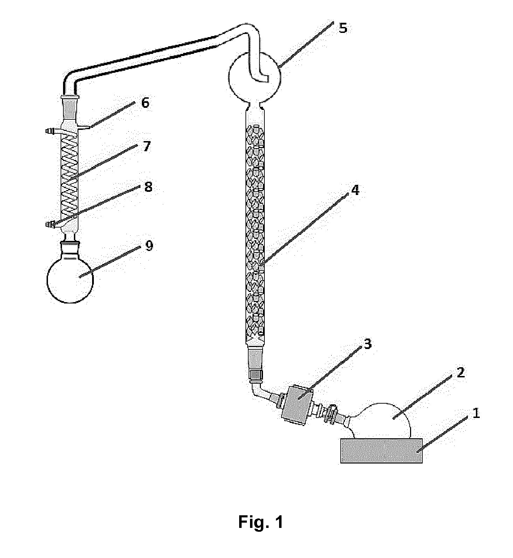

Then, it was concluded that it is possible to continuously measure the concentration of hydrogen peroxide during the concentration process, by introducing, into the rotational distillation flask, an RI sensor in a housing (of a polymer and 316 L steel) compatible with the peroxide and by appropriately introducing its conduit (as in Fig. 1).

Another aspect of the claimed method is a method for purifying the concentrated (even up to 99%) hydrogen peroxide. This being constituted by step II. The purification process consists in distilling off concentrated hydrogen peroxide in a glass apparatus, with the use of a suitable vacuum evaporator.

On the market, there are commercially available solutions which, according to the authors, can be used for the preparation of highly concentrated HTP solutions (purifying the concentrated peroxide) even at a semi-technical or technical scale.

There are commercially available rotational vacuum evaporators of a high efficiency (technical) which are fully compatible with HTP (also models made using the explosion-proof technology). Depending on the configuration, such an evaporator operating in automatic mode may serve as a purification unit for the concentrated hydrogen peroxide.

Now, the invention will be presented in greater detail in a preferred embodiment, with reference to the accompanying Figure in which:
**Fig. 1** shows a scheme of the arrangement for vacuum distillation according to the invention (concentration) of the hydrogen peroxide feedstock. In this diagram, the following designations were used: 1 - water heating bath with thermostat, 2 - rotational distillation flask with an RI sensor, 3 - electric motor, 4 - Hempel packed column with Raschig rings, 5 - catch-drop, 6 - connection of a vacuum pump, 7 - condenser, 8 - inlet for cooling water, and 9 - distillate receiver.

### Example 1

According to the invention, the arrangement for vacuum distillation of hydrogen peroxide of HTP class is characterised in that the axis of the distillation flask 2 is positioned at an angle of 110° respect to the vertical axis of the rectification column 4, as shown in the drawing (Fig. 1). The position of the distillation flask 2 is constant, as close as possible to the horizontal position (110° respect to the axis of the column 4). This position allows achieving the maximum amount of evaporation of the concentrated medium (maximum rate of the concentration process). The distillation flask 2 rotates around its own axis (with an adjustable number of revolutions), simultaneously being subject to heating (at a controlled temperature of the water bath 1).

According to the invention, in the tested apparatus, a Hempel column 4 with a length of 0.6 m with thermal insulation was used, filled with bulk packing (glass Raschig rings having a diameter of 8 mm). The packing is regular, only at the height of 10 cm from its base, the diameter is widened by placing there a 10 cm layer of Raschig rings of larger diameter (10 mm) in order to avoid overheating of the reflux liquid.

According to the invention, the use of the Hempel column having a length of 1.2 m will be also possible, and the use of the Vigreux column will be possible as well). One Hempel column with packing is more efficient.

The pressure at the top of the distillation column 4 does not exceed the value of 15 mbars. Preferably, the concentration process according to the invention is conducted in the range of 7 to 15 mbars.

All seals, valves and other movable parts of the installation are made from polytetrafluoroethylene (PTFE).

The distillation flask 2 with a volume of 2 dm³ is located obliquely respect to the column 4 and is connected to a device propelling it into rotation around its own axis 3 (Fig. 1).

The process of fractional vacuum distillation (step I, i.e. concentration) is conducted using an electronic vacuum controller. The negative pressure in the arrangement is typically maintained at 12 mbars (+/- 3 mbars), but it may be lower, e.g. 8 mbars (+/- 2 mbars) during the whole concentration process which lasts about 5 h for 1 dm³ of charge.

Hydrogen peroxide concentrated to a value of at least 98% (during whole step I) goes into a rotational vacuum evaporator, adapted to operate with this substance (all parts in contact with the peroxide are made from materials that are fully compatible, and the glass elements are coated with a polymer (preferably PTFE), which constitutes an additional protection of the flask in the case of its damage during utilization - it prevents dangerous implosion consequences), but it does not have any relevance to the purification step.

The purification process (step II) consists of distilling off hydrogen peroxide with a concentration of 98%. The parameters for this process are as follows: revolutions of the distillation flask not lower than 120 rev./min., heating bath temperature of 50°C, negative pressure of 8 mbars (+/-2 mbars), condenser temperature of 5°C. The purification process also lasts up to about 5 h (for 1 litre of 98% peroxide), depending on the efficiency of the condenser. After this step completes, almost 1 dm³ (losses during this step do not exceed 5%) of hydrogen peroxide with a concentration of 98% and a purity of HTP class is obtained.

This purification process can be conducted at a much lower negative pressure, then the process is even more efficient. Everything at this step depends on the class of the rotational vacuum evaporator and the vacuum pump. The present configuration for this step is very good because it allows conducting this process even at a negative pressure of 5 mbars and a temperature of 40°C, which firstly slightly accelerates the process, and secondly additionally minimises (very marginal, but still existing) spontaneous decomposition of the peroxide, which increases with temperature increase.

### Embodiments of the Invention

The following embodiments of the invention 2 to 4 show the results obtained for the configuration, according to the invention, of the vacuum distillation, with the flask at an angle of **110°** respect to the vertical axis of the column:

### Example 2 - Concentration of 800 ml of 60% H₂O₂

Initial conditions of the process; heating bath temperature of 42°C, (constant) coolant temperature of 5°C, negative pressure of 12 mbars, about 80 rev/min. The process completes after 4 h.

Final conditions: heating bath temperature of 55°C, (constant) coolant temperature of 5°C, negative pressure of 12 mbars, about 80 rev/min.

Obtained: 400 ml of distillate with a concentration of 16% and 390 ml of concentrated H₂O₂ with a concentration of 92%.

### Example 3 - Concentration of 900 ml of 60% H₂O₂

Initial conditions of the process; heating bath temperature of 42°C, (constant) coolant temperature of 5°C, negative pressure of 12 mbars, about 80 rev/min. The process completes after 5 h and 30 min.

Final conditions: heating bath temperature of 55°C, (constant) coolant temperature of 5°C, negative pressure of 12 mbars, about 80 rev/min.

Obtained: 470 ml of distillate with a concentration of 20% and 420 ml of concentrated H₂O₂ with a concentration of 96%.

### Example 4 - Concentration of 900 ml of 60% H₂O₂

Initial conditions of the process: heating bath temperature of 42°C, (constant) coolant temperature of 5°C, negative pressure of 10 mbars, about 80 rev/min. The process completes after 4 h and 30 min.

Final conditions: heating bath temperature of 55°C, (constant) coolant temperature of 5°C, negative pressure of 8 mbars, about 80 rev/min.

Obtained: 430 ml of distillate with a concentration of 28% and 310 ml of concentrated H₂O₂ with a concentration of 98.8%.

### Examples 5.1 to 5.2

The following examples constitute exemplary concentrations for the configuration with the vertical column and the flask at an angle of 120° respect to the vertical axis of the column:

### Example 5.1 - Concentration of 800 ml of 60% H₂O₂

Initial conditions of the process; heating bath temperature of 42°C, (constant) coolant temperature of 5°C, negative pressure of 10 mbars, about 80 rev/min. The process completes after 4 h and 30 min.

Final conditions: heating bath temperature of 55°C, (constant) coolant temperature of 5°C, negative pressure of 10 mbars, about 80 rev/min.

420 ml of distillate with a concentration of 15% and 375 ml of concentrated hydrogen peroxide with a concentration of 94.5% were obtained.

### Example 5.2 - Concentration of 800 ml of 60% H₂O₂

Initial conditions of the process; heating bath temperature of 42°C, (constant) coolant temperature of 5°C, negative pressure of 10 mbars, about 80 rev/min. The process completes after 4 h and 30 min.

Final conditions: heating bath temperature of 55°C, (constant) coolant temperature of 5°C, negative pressure of 10 mbars, about 80 rev/min.

400 ml of distillate with a concentration of 16% and 390 ml of concentrated hydrogen peroxide with a concentration of 90% were obtained.

### Example 6

The following example constitutes another exemplary concentration for the configuration with the vertical column and the flask at an angle of **130°** respect to the vertical axis of the column:

### Concentration of 800 ml of 60% H₂O₂

Initial conditions of the process; heating bath temperature of 42°C, (constant) coolant temperature of 5°C, negative pressure of 12 mbars, about 80 rev/min. The process completes after 5 h and 30 min.

Final conditions: heating bath temperature of 55°C, (constant) coolant temperature of 5°C, negative pressure of 12 mbars, about 80 rev/min.

400 ml of distillate with a concentration of 13% and 400 ml of concentrated hydrogen peroxide with a concentration of 93% were obtained.

### Comparative examples 7.1 to 7.4

The following examples constitute exemplary concentrations for the configuration with the vertical column and also the flask (the distillation flask at an angle of **180°** respect to the axis of the column, i.e. known "traditional" arrangement for fractional vacuum distillation):

### Example 7.1 - Concentration of 1200 ml of 60% H₂O₂

Initial conditions of the process; heating bath temperature of 42°C, (constant) coolant temperature of 5°C, negative pressure of 12 mbars, about 80 rev/min. The process completes after 8 h.

Final conditions: heating bath temperature of 55°C, (constant) coolant temperature of 5°C, negative pressure of 12 mbars, about 80 rev/min.

Obtained: 360 ml of distillate with a concentration of 3% and 830 ml of concentrated H₂O₂ with a concentration of 86%.

### Example 7.2 - Concentration of 1300 ml of 60% H₂O₂

Initial conditions of the process; heating bath temperature of 42°C, (constant) coolant temperature of 5°C, negative pressure of 10 mbars, about 80 rev/min. The process completes after 9 h and 30 min.

Final conditions: heating bath temperature of 55°C, (constant) coolant temperature of 5°C, negative pressure of 8 mbars, about 80 rev/min.

Obtained: 580 ml of distillate with a concentration of 21% and 700 ml of concentrated H₂O₂ with a concentration of 96%.

### Example 7.3 - Concentration of 1000 ml of 60% H₂O₂

Initial conditions of the process; heating bath temperature of 42°C, (constant) coolant temperature of 5°C, negative pressure of 12 mbars, about 80 rev/min. The process completes after 8h and 30 min.

Final conditions: heating bath temperature of 55°C, (constant) coolant temperature of 5°C, negative pressure of 8 mbars, about 80 rev/min.

Obtained: 620 ml of distillate with a concentration of 28% and 370 ml of concentrated H₂O₂ with a concentration of 99%.

### Comparative example 7.4 - Concentration of 1300 ml of 60% H₂O₂

Initial conditions of the process; heating bath temperature of 38°C, (constant) coolant temperature of 5°C, negative pressure of 12 mbars, about 80 rev/min. The process completes after 13 h and 30 min.

Final conditions: heating bath temperature of 55°C, (constant) coolant temperature of 5°C, negative pressure of 10 mbars, about 80 rev/min.

In the second fraction, 200 ml of distillate with a concentration of 27% and the total amount of concentrated hydrogen peroxide, 650 ml of a concentration of 98%, were obtained.

### Results/Conclusions

The table below summarises the results of the presented examples:

| Position of the distillation flask respect to the column [in degrees] | Collected results | The results obtained for traditional distillation (180°) |
|---|---|---|
| below 105° | - | Conducting the process with such a position of the flask is not profitable as the flask can be filled to a maximum of 40% of its nominal volume - too "vertical" position (the liquid can easily flow to the neck of the flask) |
| 110° (examples 2 to 4) | Time: 4-5.5h | Duration of distillation was shortened |
| 120° (examples 5.1 to 5.2) | Time: 4.5h | Duration of distillation was shortened |
| Position of the distillation flask respect to the column [in degrees] | Collected results | The results obtained for traditional distillation (180°) |
| 130° (example 6) | Time: 5.5h | Duration of distillation was shortened |
| 180° - traditional position (comparative examples 7.1 to 7.4) | Time: above 8h | Duration of the process definitely longer |

- According to the present invention unexpectedly better results are obtained because duration of the concentration process is shortened, for example reaching about 5 h for a yield of 1 litre of 98% H₂O₂;
- When the angle of inclination of the column to the distillation flask deviates from 110 degrees (i.e. is above 110°), the time of concentration gradually increases, and also the rate of liquid evaporation decreases, and possibly bumping may occur. Therefore, the yield of highly concentrated H₂O₂ (above 98%) also decreases, in comparison to the most preferred position of the arrangement according to the invention.
- According to the present invention, obtaining H₂O₂ with a concentration of above 98%, with the angle of inclination of the column to the distillation flask below 105° is not effective because it is associated with capabilities of the apparatus, e.g. related to the necessity of feedstock filling a , etc. - risk of overflow through the neck of the flask and flooding the column.
- The choice of the flask position according to the invention (preferably, at an angle of 110°, almost horizontally) results from the optimisation of the concentration process (duration shortening) by eliminating the process of bumping and simultaneously increasing the rate of liquid evaporation (because it evaporates from the film which is formed within the rotating distillation flask, and in such a position, the surface of such a film is the highest at relatively the largest amount of liquid that can be subjected to concentration. Even smaller angle implies the necessity to use a smaller amount of liquid for the nominal volume of the flask).
- From the research conducted by the authors, it results that the use of 60% hydrogen peroxide p.a. (the highest available concentration of hydrogen peroxide for sale in Poland) also has an impact on shortening the time of concentration. Such a high purity of the feedstock used allows, after the purification step, obtaining very pure HTP, and therefore very stable, "friendly" for its decomposition catalysts, especially for those based on the use of precious metals which are easily contaminated by phosphates, sulphur compounds and other contaminants.

## Claims

1. An arrangement for vacuum distillation of hydrogen peroxide feedstock, comprising in sequence: heating means (1), an axisymmetric distillation flask (2), means (3) for propelling the distillation flask (2) in rotation about its axis, a rectification column (4), a catch-drop (5), a connection of a vacuum pump (6), a condenser (7), an inlet for cooling water (8), a distillate receiver (9), **characterised in that** the axis of the distillation flask (2) is positioned at an angle of 105° to 140° respect to the rectification column (4), the distillation flask (2) is capable of rotation about its axis and is at least partially placed in the heating means (1), and furthermore the distillation flask (2) comprises an RI sensor for measuring the concentration of hydrogen peroxide.

2. The arrangement according to claim 1, **characterised in that** the axis of the distillation flask (2) is positioned at an angle of 110° to 130°, more preferably 110° to 120°, most preferably 110°, respect to the rectification column (4).

3. The arrangement according to claim 1 or 2, **characterised in that** the RI sensor is located inside the distillation flask (2) and is arranged in a housing that is compatible with hydrogen peroxide, preferably in a housing of polytetrafluoroethylene (PTFE) and 316L steel.

4. The arrangement according to claim 1 or 2, or 3, **characterised in that** it comprises the rectification column (4) selected from a packed column and a Vigreux type column, preferably with a length of 0.6m or 1.2m, wherein the packing is preferably constituted by Raschig rings, beads or helices.

5. The arrangement according to claim 4, **characterised in that** it comprises a Hempel column packed with Raschig rings.

6. The arrangement according to any one of the preceding claims 1 to 5, **characterised in that** it is made of glass and the glass elements are covered with a polymer, preferably polytetrafluoroethylene (PTFE).

7. The arrangement according to any one of the preceding claims 1 to 6, **characterised in that** the heating means (1) are constituted by a water heating bath with thermostat (1).

8. The arrangement according to any one of the preceding claims 1 to 7, **characterised in that** the means (3) are constituted by an electric motor.

9. The arrangement according to any one of the preceding claims 1 to 8, **characterised in that** the distillation flask (2) is with an adjustable number of revolutions.

10. The arrangement according to any one of the preceding claims 1 to 9, **characterised in that** the axis of the rectification column (4) is vertical.

11. A method for obtaining hydrogen peroxide, especially of HTP class, for propulsion applications, by a two-step process of vacuum distillation, **characterised in that** it is performed in the arrangement for vacuum distillation according to anyone of the preceding claims 1 to 10, wherein the following steps are successively conducted:
a) step of fractional vacuum distillation, consisting in concentrating the hydrogen peroxide feedstock, and then
b) step of vacuum purification of hydrogen peroxide obtained above, consisting in distilling off hydrogen peroxide, preferably having a concentration of above 98%,
and in step a) the rotational distillation flask operates at about 80 revolutions/minute, at a negative pressure of 7 - 20 mbars and at a water bath temperature of 35 - 55°C, and in step b) the rotational vacuum evaporator operates in conditions of at least 120 revolutions/minute, at a negative pressure of up to 12 mbars and at a water bath temperature of up to 55°C.

12. The method according to claim 11, **characterised in that** in step a) the rotational distillation flask operates in conditions of 10 - 15 mbars.

13. The method according to claim 11 or 12, **characterised in that** as the feedstock - hydrogen peroxide in step a), a maximally concentrated solution, preferably having a concentration above 60%, is used.

14. The method according to any one of claims 11 to 13, **characterised in that** in step b) the rotational vacuum evaporator operates at a negative pressure of 8 - 10 mbars.
